# EUROPEAN PATENT APPLICATION

(11) **EP 1 983 136 A2**
(43) Date of publication of application: **22.10.2008**
(21) Application number: 08153310.1
(22) Date of filing: 26.03.2008
(51) Int. Cl.: E06B 3/10, E06B 3/263

(54) **Lamellar wooden door or window made of a soundproofing, heat-insulating synthetic material**

(30) Priority: 27.03.2007 IT VR20070020 U
(71) Applicant: Boninsegna, Ezio, 37066 Ronco All'Adige (VR) (IT)
(72) Inventor: Boninsegna, Ezio, 37066 Ronco All'Adige (VR) (IT)
(74) Representative: Fisauli, Beatrice A. M.

(57) **Abstract**

This invention relates to a soundproofing, heat-insulating window or door (1) comprising a plurality of lamellar wooden elements (12, 14, 16, 22, 24, 26) and a plurality of elements (40, 42, 44, 46) made of a soundproofing, heat-insulating synthetic material. Interstices (30, 32, 34, 36) are obtained in said lamellar wooden elements (12, 14, 16, 22, 24, 26) and in those interstices the elements (40, 42, 44, 46) made of a soundproofing, heat-insulating synthetic material are included.

## Description

This invention relates to lamellar wooden windows, doors, skylights or the like, made of a soundproofing, heat-insulating synthetic material.

As is known, the technical rules of this field provide that said lamellar wooden doors and windows of new construction must involve a considerable reduction of the heat transmission and a better sound absorption.

The prior art discloses a fixed frame and a movable element (the so-called "sash" or "wing") of windows or doors, with lamellar wood layers alternated with layers in an insulating synthetic material, said layers being fixed to each other through a suitable glue.

A first disadvantage of said solution is that for the carrying out of a wished profile for the outer surface of the window or door, it is possible to shape said wood layers and synthetic layers only after their mutual glueing in order to avoid a formation of unwished projections and edges on said profile, which will prejudice the functionality of the window or door and involves a considerable limitation in the tertiarization of at least some parts of the process of production and a consequent impossibility of utilizing an economy of scale as well as a further disadvantage of more elaborate expensive processes of recycle and/or discharge destination of the material utilized.

A further disadvantage of the prior art is that a window or door with outer surface defined at least partially by a synthetic material is less suitable for the fixing of hinges, packings and other fittings than the prior art windows or doors made only of wood.

Besides, the manufacturers are compelled to cover the outer surfaces made of insulating material with suitable coverings in order to make the prior art windows or doors more pleasant to see.

The aim and object of the present invention is to overcome all the above-mentioned problems and further ones through a window or door comprising a plurality of lamellar elements that are shaped in such a way that said window or door shows a plurality of interstices, each interstice being fit to completely include an element made of a synthetic soundproofing, heat-insulating material, so as to carry out a basically continuous barrier in the sector of the window sash or door wing when the window or door is closed.

Said lamellar wood elements and said synthetic elements are shaped separately. Then, they are fixed to each other in the assembling stage of the window or door.

In addition, the window or door according to the present invention is provided with an outer surface made only of wood so that it is more suitable for the fixing of hinges, packings and other fittings than the prior art.

A further advantage is a better pleasantness in the aspect of the present invention than the prior art, which is due to the fact that the insulating synthetic element is completely hidden to the sight, there being no need to produce and mount said coverings on the window or door as regards the outer surfaces of the insulating material.

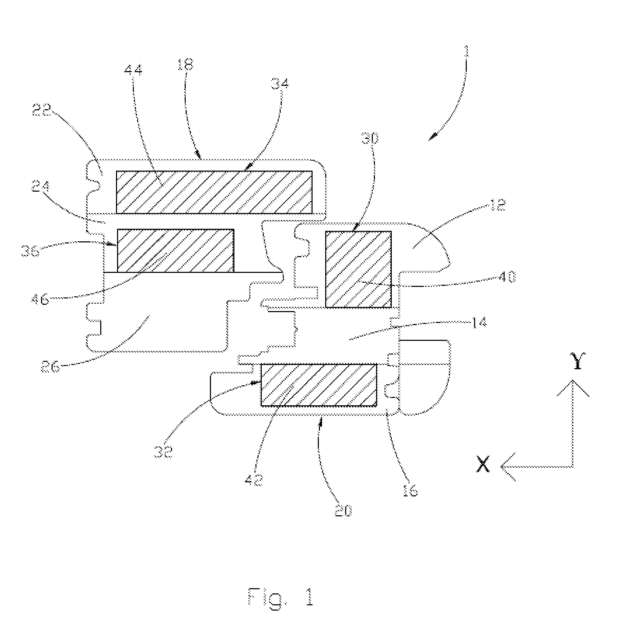

Further features and details of the present invention will be better understood from the following specification that is provided as a non-exclusive example with reference to the accompanying drawing, wherein Fig. 1 is a cross-section view of a part of window sash or door wing of a window or door according to the present invention.

With reference to the accompanying drawing, number 1 denotes a window or door according to the present invention, comprising a plurality of lamellar wooden elements 12, 14, 16, 22, 24, 26. These wooden elements are shaped in such a way that the window or door 1 shows interstices 30, 32, 34, 36. Each of these interstices 30, 32, 34, 36 includes an element 40, 42, 44, 46 made of an insulating synthetic material.

In an embodiment of the window or door 1 according to the present invention, (only a portion of window sash or door wing is represented in Fig. 1), it comprises a frame 5 and a frame 6. The insulating synthetic elements 40, 42, 44, 46 are placed one upon another at least partially in the direction Y as represented in Fig. 1 and therefore, when the window or door 1 is closed, the whole of the insulating elements 40, 42, 44, 46 forms a barrier that extends from the left end of the insulating element 46 to the right end of the insulating element 40 in the direction X. Thus the projection of the elements 40, 42, 44, 46 made of an insulating synthetic material on a plane X, Z (the axis Z is not indicated in figure 1) forms a continuous surface.

Basically, the barrier is continuous, so that it allows a heat-insulating and soundproofing in compliance with the technical requirements of the standard rules.

In a preferred embodiment, since the insulating synthetic elements 40, 42, 44, 46 are completely included inside the interstices 30, 32, 34, 36, the window or door 1 shows an outer wooden surface that is made entirely of wood, wood being a very suitable material for the fixing of hinges, packings and other accessories for windows or doors. This solution is also advantageous because an outer wooden surface made entirely of wood gives the window or door 1 a more pleasant aspect than the prior art without needing the aforesaid coverings.

A technician of the field could conceive some changes and versions that are to be considered as included in the scope of protection of the present invention. As an example, some insulating synthetic elements may be placed only in the first frame or alternatively in the second one.

## Claims

1. A soundproofing, heat-insulating window or door comprising at least two lamellar wooden element (12, 14, 16, 22, 24, 26) and at least a soundproofing, heat-insulating synthetic elements (40, 42, 44, 46), **characterized in that** at least an interstice (30, 32, 34, 36) is obtained in said at least two lamellar wooden elements (12, 14, 16, 22, 24, 26), said soundproofing, heat-insulating synthetic element (40, 42, 44, 46) being included in said interstice (30, 32, 34, 36).

2. A soundproofing, heat-insulating window or door as claimed in claim 1, **characterized in that** at least two interstices (30, 32, 34, 36) are obtained in said at least two lamellar wooden elements (12, 14, 16, 22, 24, 26), said soundproofing, heat-insulating synthetic elements (40, 42, 44, 46) being included in said at least two interstices (30, 32, 34, 36).

3. A soundproofing, heat-insulating window or door as claimed in claim 2, **characterized in that** at the projection of said at least two elements (40, 42, 44, 46) made of an insulating synthetic material on a plane (X, Z) forms a continuous surface so that said at least two soundproofing, heat-insulating synthetic elements (40, 42, 44, 46) form a soundproofing and heat-insulating barrier.

4. A soundproofing, heat-insulating window or door as claimed in claim 3, **characterized in that** said at least two soundproofing, heat-insulating elements (40, 42, 44, 46) are placed one upon another at least partially in a direction (Y).
